# EUROPEAN PATENT APPLICATION

(11) **EP 2 439 554 A1**
(43) Date of publication of application: **11.04.2012**
(21) Application number: 10783474.9
(22) Date of filing: 04.06.2010
(51) Int. Cl.: G01S 13/89, H01P 1/00, H01Q 21/06

(54) **MILLIMETER WAVE IMAGING SENSOR**

(30) Priority: 05.06.2009 JP 2009136440
(71) Applicant: Masprodenkoh Kabushikikaisha, Aichi 470-0194 (JP); Chuo Electronics Co., Ltd., Hachioji-shi, Tokyo 192-0051 (JP); Tohoku University, Aoba-ku Sendai-shi Miyagi 980-8577 (JP)
(72) Inventor: UEMURA, Jun, Nisshin-shi Aichi 470-0194 (JP); TAKEDA, Masamune, Nisshin-shi Aichi 470-0194 (JP); YAMADA, Kota, Nisshin-shi Aichi 470-0194 (JP); TAKAHASHI, Junichi, Nisshin-shi Aichi 470-0194 (JP); HASEGAWA, Tsuyoshi, Hachioji-shi Tokyo 192-0051 (JP); HIRAI, Haruyuki, Hachioji-shi Tokyo 192-0051 (JP); NIIKURA, Hirotaka, Hachioji-shi Tokyo 192-0051 (JP); MATSUZAKI, Tomohiko, Hachioji-shi Tokyo 192-0051 (JP); SATO, Hiroyasu, Sendai-shi Miyagi 980-8577 (JP); SAWAYA, Kunio, Sendai-shi Miyagi 980-8577 (JP); MIZUNO, Koji, Sendai-shi Miyagi 980-8577 (JP)
(74) Representative: Roth, Klaus
(86) International application number: PCT/JP2010/059566
(87) International publication number: WO 2010/140692

(57) **Abstract**

A millimeter wave imaging sensor includes a plurality of millimeter wave sensors disposed on one plane intersecting an incoming direction of millimeter waves emitted from a subject. Each of the plurality of millimeter wave sensors includes an antenna portion, a wave detection unit, a transmission path, and a shielding member. Adjacent millimeter wave sensors, among the plurality of millimeter wave sensors, are positioned according to outer peripheral shape of the shielding members of the adjacent millimeter wave sensors.

## Description

### TECHNICAL FIELD

The present invention is related to a millimeter wave imaging sensor that receives millimeter waves emitted from a subject and takes an image of the subject.

### BACKGROUND ART

Conventionally, a millimeter wave imaging sensor, wherein a plurality of millimeter wave sensors, extending in an incoming direction of millimeter waves, is disposed on a plane that intersects the incoming direction, has been suggested (see Patent Document 1).

### PRIOR ART DOCUMENT

### PATENT DOCUMENT

Patent Document 1: Unexamined Japanese Patent Publication No. 2007-124551

### SUMMARY OF THE INVENTION

### PROBLEMS TO BE SOLVED BY THE INVENTION

The above-described millimeter wave imaging sensor is constituted in such a manner that connectors are made with rear ends of respective millimeter wave sensors and members fitted with the rear ends, and that positioning and securing of the millimeter wave sensors are done by using the connectors.

Such positioning and securing are done only in the rear end sides of the respective millimeter wave sensors. Thus, the longer the millimeter wave sensors are, the more easily a small misalignment, caused while the millimeter wave sensors are secured, creates a large directional misalignment of the millimeter wave sensors. This makes securing the millimeter wave sensors with high positioning accuracy difficult. Even if the millimeter wave sensors are accurately secured, due to the similar reason explained above, the accuracy in the positioning is easily affected by warpage of the members constituting the millimeter wave sensors. Therefore, such positioning and securing are not suitable for maintaining high positioning accuracy.

The present invention is made so as to solve such problems. The purpose of the invention is to provide a technique wherein millimeter wave sensors can be respectively secured with high positioning accuracy, and the high positioning accuracy can be easily maintained.

### MEANS FOR SOLVING THE PROBLEM

A millimeter wave imaging sensor according to a first aspect of the present invention, which is made so as to solve the above-described problems, includes a plurality of millimeter wave sensors disposed on one plane intersecting an incoming direction of millimeter waves emitted from a subject. Each of the plurality of millimeter wave sensors is provided with: an antenna portion extending toward the incoming direction of the millimeter waves; a wave detection unit that detects signal levels of the millimeter waves received by the antenna portion; a transmission path that connects the antenna portion and the wave detection unit; and a shielding member that is conductive and surrounds the transmission path. Among the plurality of millimeter sensors, adjacent millimeter wave sensors are positioned according to outer peripheral shape of the shielding members of the adjacent millimeter wave sensors.

The millimeter wave imaging sensor according to the first aspect may be constituted similarly to a millimeter wave imaging sensor according to a second aspect of the present invention.
In the millimeter wave imaging sensor according to the second aspect, each of the plurality of millimeter wave sensors includes a plate-like substrate extending along the incoming direction of the millimeter waves. The transmission path and the wave detection unit are disposed on the substrate. The shielding member surrounds an area on the substrate including at least an area where the transmission path is disposed.

The millimeter wave imaging sensor according to the first aspect and the millimeter wave imaging sensor according to the second aspect may be constituted similarly to a millimeter wave imaging sensor according to a third aspect of the present invention.
In the millimeter wave imaging sensor according to the third aspect, the shielding member is made of a conductive metal material.

### EFFECTS OF THE INVENTION

In the millimeter wave imaging sensor according to the first to third aspects, the conductive shielding members, surrounding the transmission paths connecting the antenna portions and the wave detection units, can work as spacers that determine the positioning of the adjacent millimeter wave sensors.

In this structure, the transmission paths are not disposed in the rear end sides of the millimeter wave sensors due to a structural reason. In such structure wherein positioning is determined by the shielding members surrounding the transmission paths, positioning can be done in the front end sides of the millimeter wave sensors, as compared to a structure wherein positioning is done with the rear ends of millimeter wave sensors.

Consequently, the positioning becomes less affected by misalignment caused while the millimeter wave sensors are secured, or warpage of the members caused after the securing. As a result, the millimeter wave sensors can be respectively secured with high positioning accuracy, and the high positioning accuracy can be easily maintained.

If the shielding members are made of a conductive metal material, heat dissipation effect, corresponding to the heat-transfer coefficient of the material, can be expected.

### BRIEF DESCRIPTION OF THE DRAWINGS

Fig. 1 is a block diagram showing an entire structure of a millimeter wave imaging device;
Fig. 2 is a block diagram showing a structure of a millimeter wave sensor;
Figs. 3A-3B are views wherein Fig. 3A is a lateral view showing an entire image of the millimeter wave sensor, and Fig. 3B is a top view showing the millimeter wave sensor; and
Fig. 4 is a perspective view of a millimeter wave imaging sensor showing a structure of the millimeter wave imaging sensor.

### EXPLANATION OF REFERENCE NUMERALS

1···millimeter wave imaging device, 10···lens antenna, 20···millimeter wave imaging sensor, 30···reflector, 32···reflection surface, 50···controller, 60···millimeter wave sensor, 62···antenna portion, 68···wave detection unit, 80···shielding member

### MODE FOR CARRYING OUT THE INVENTION

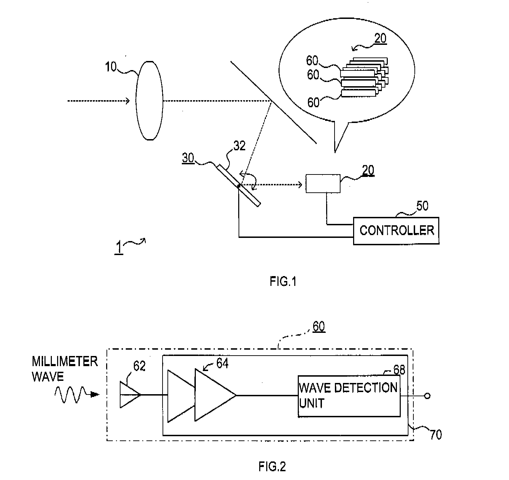

An embodiment of the present invention is described below with reference to the drawings.
As shown in Fig. 1, a millimeter wave imaging device 1 includes: a lens antenna 10 that takes in millimeter waves emitted from a subject and forms an image of the subject; a millimeter wave imaging sensor 20 that takes an image of the subject by the millimeter waves emitted from the subject; a reflector 30 having a reflection surface 32 that reflects millimeter waves taken into the lens antenna 10 and guides the millimeter waves to the millimeter wave imaging sensor 20; and a controller 50 that controls an entire operation of the millimeter wave imaging device 1.

In the millimeter wave imaging sensor 20, a plurality of millimeter wave sensors 60 are disposed in a m×n matrix (m,n = 1,2, ···; but not m=1, n=1) on a plane that intersects an incoming direction of millimeter waves (a plane extending along the vertical direction in Fig. 1).

As shown in Fig. 2, the millimeter wave sensors 60 are each equipped with: an antenna portion 62 extending toward the incoming direction of millimeter waves emitted from a subject; a low noise amplifier (LNA) 64 that amplifies received signals from the antenna portion 62; and wave detection unit 68 that detects signal levels of the received signals amplified by the LNA 64. These constituents, except for the antenna portion 62, are disposed on a plate-shaped substrate 70 extending along the incoming direction of millimeter waves. The antenna portion 62 is attached on the substrate 70 only in the rear end side thereof.

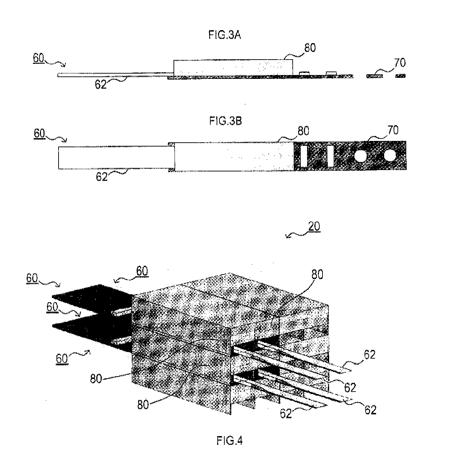

As shown in Figs. 3A and 3B, each of the millimeter wave sensors 60 is provided with a conductive shielding member 80 that surrounds an area on the substrate 70, which includes: a transmission path, extending from the antenna portion 62 to the wave detection unit 68; the LNA 64; and the wave detection unit 68. The shielding member 80 is made of a conductive metal material.

The shielding member 80 is formed in a manner so that the outer peripheral shape thereof contacting with adjacently disposed millimeter wave sensors 60 (to be referred to as "adjacent outer peripheral shape") contacts with the shielding members 80 of the adjacent millimeter wave sensors 60 so as to set the mutual positions of the millimeter wave sensors 60 (see Fig. 4).

In the present embodiment, as the adjacent outer peripheral shape for disposing respective millimeter wave sensors 60 in the m×n matrix, plane surfaces respectively parallel to the direction of the rows and the direction of the columns are adopted. Therefore, the cross sectional surfaces of the shielding members 80, intersecting the incoming direction of millimeter waves, are formed in rectangular manners (the lower sides are open) surrounding the above-described areas.

From the respective millimeter wave sensors 60 of the millimeter wave imaging sensor 20, detection values, corresponding to signal levels of millimeter waves received at respective reception points, are obtained. The controller 50 sequentially takes in the detection values from the respective millimeter wave sensors 60 so as to generate image data.

In the millimeter wave imaging sensor 20 constituted as above, the conductive shielding members 80, surrounding the areas on the substrates 70 including the transmission paths from the antenna portions 62 to the wave detection units 68, LNAs 64, and the wave detection units 68, can work as spacers that determine the positioning of the respective adjacent millimeter wave sensors 60.

In this structure, the above-described transmission paths, LNAs 64, and the wave detection units 68 are not disposed in the rear end sides of the millimeter wave sensors 60 (see Figs. 3A and 3B) due to a structural reason. In such structure wherein positioning is determined by the shielding members 80 surrounding some areas including these constituents, the positioning can be done in the front end sides of the millimeter wave sensors 60, as compared to a structure wherein positioning is done by using the rear ends of millimeter wave sensors.

Consequently, the positioning becomes less affected by misalignment caused while the millimeter wave sensors 60 are secured, or warpage of the members caused after the securing. As a result, the millimeter wave sensors 60 can be respectively secured with high positioning accuracy, and the high positioning accuracy can be easily maintained.

In the above-described structure, the shielding members 80 are made of a conductive metal material. Therefore, heat dissipation effect, corresponding to heat-transfer coefficient of the material, can be expected.
The above explained an embodiment of the present invention. However, it is to be noted that the present invention is not limited to the above-described embodiment, and that variations can be adopted within the technical scope of the present invention.

For example, in the above-described embodiment, an example is illustrated wherein the millimeter wave sensors 60 of the millimeter wave imaging sensor 20 are respectively disposed in such a manner so that the plurality of millimeter wave sensors 60 is placed in the m×n matrix on the plane intersecting the incoming direction of millimeter waves. Alternatively, the plurality of millimeter wave sensors 60 may be disposed other than in the m×n matrix.

Moreover, in the above-described embodiment, an example is illustrated wherein the adjacent peripheral shape for disposing the respective millimeter wave sensors 60 of the millimeter wave imaging sensor 20 in the m×n matrix is planes respectively extending along the row direction and the column direction. However, the adjacent peripheral shape may be in any shape, other than the above-described shape, as long as the positioning of the millimeter wave sensors 60 can be mutually determined.

## Claims

1. A millimeter wave imaging sensor comprising a plurality of millimeter wave sensors disposed on one plane intersecting an incoming direction of millimeter waves emitted from a subject, each of the plurality of millimeter wave sensors including:
an antenna portion extending toward the incoming direction of the millimeter waves;
a wave detection unit that detects signal levels of the millimeter waves received by the antenna portion;
a transmission path that connects the antenna portion and the wave detection unit; and
a shielding member that is conductive and surrounds the transmission path,
wherein, among the plurality of millimeter wave sensors, adjacent millimeter wave sensors are positioned according to outer peripheral shape of the shielding members of the adjacent millimeter wave sensors.

2. The millimeter wave imaging sensor according to claim 1,
wherein each of the plurality of millimeter wave sensors includes a plate-like substrate extending along the incoming direction of the millimeter waves,
wherein the transmission path and the wave detection unit are disposed on the substrate, and
wherein the shielding member surrounds an area on the substrate including at least an area where the transmission path is disposed.

3. The millimeter wave imaging sensor according to claim 1 or claim 2, wherein the shielding member is made of a conductive metal material.
